# EUROPEAN PATENT APPLICATION

(11) **EP 3 162 194 A1**
(43) Date of publication of application: **03.05.2017**
(21) Application number: 15814400.6
(22) Date of filing: 27.03.2015
(51) Int. Cl.: A01G 31/00, A01G 7/00

(54) **HYDROPONIC METHOD AND HYDROPONIC DEVICE**

(30) Priority: 30.06.2014 JP 2014134274
(71) Applicant: Panasonic Intellectual Property Management Co., Ltd., Osaka-shi, Osaka 540-6207 (JP)
(72) Inventor: YANO, Hiroshi, Osaka-shi, Osaka 540-6207 (JP); SAKAI, Ayumi, Osaka-shi, Osaka 540-6207 (JP); KATO, Sayaka, Osaka-shi, Osaka 540-6207 (JP); JEONG, WooHyeun, Osaka-shi, Osaka 540-6207 (JP)
(74) Representative: Müller-Boré & Partner Patentanwälte PartG mbB
(86) International application number: PCT/JP2015/001789
(87) International publication number: WO 2016/002114

(57) **Abstract**

When a cultivation condition value (X) changed by using a prescribed value (PV) in a changing step (S3) is equal to or above a preset upper limit value (UL), the cultivation condition value (X) is replaced with the upper limit value (UL). When the cultivation condition value (X) changed by using the prescribed value (PV) in the changing step (S3) is equal to or below a preset lower limit value (LL), the cultivation condition value (X) is replaced with the lower limit value (LL).

## Description

### TECHNICAL FIELD

The present invention relates to so-called a hydroponic method and a hydroponic device, with which to cultivate a plant by immersing roots (an underground part) of the plant in water without using soil.

### BACKGROUND ART

Hydroponic cultivation has heretofore been studied for cultivating a plant without using soil. In the hydroponic cultivation, a plant grows while storing carbohydrates generated in its leaves by photosynthesis into its roots as with soil cultivation. Accordingly, as with the soil cultivation, the hydroponic cultivation also requires an increase in amount of photosynthesis in the leaves in order to accelerate the growth of the plant.

In general, an amount of photosynthesis is substantially proportional to an amount of carbon dioxide consumed (hereinafter referred to as a "CO₂ consumption amount") by a plant. Accordingly, in order to accelerate the growth of the plant, it is desirable to cultivate the plant under such a cultivation condition that can increase the CO₂ consumption amount by the plant. Techniques related to this concept are disclosed, for example, in Patent Literature 1 and Patent Literature 2 cited below.

### CITATION LIST

### PATENT LITERATURE

Patent Literature 1: Japanese Unexamined Patent Application Publication No. Sho 59-154925
Patent Literature 2: Japanese Unexamined Utility Model Registration Application Publication No. Sho 62-148049

### SUMMARY OF INVENTION

### PROBLEM TO BE SOLVED BY INVENTION

Although the conventional hydroponic cultivation is capable of maintaining cultivation conditions that increase the CO₂ consumption amount, the conventional hydroponic cultivation has so far failed to perform detailed management of cultivation condition values for the hydroponic cultivation of the plant, such as a temperature of ambient air around the plant. In this context, the detailed management of the cultivation condition values for the hydroponic cultivation of the plant has been required, while maintaining the cultivation conditions as much as possible for increasing the CO₂ consumption amount by the plant.

The present invention has been made in view of the aforementioned problem. An object of the present invention is to provide a hydroponic method and a hydroponic device which are capable of performing detailed management of cultivation condition values for hydroponic cultivation of a plant while maintaining cultivation conditions as much as possible for increasing a CO₂ consumption amount by the plant.

### SOLUTION TO PROBLEM

A hydroponic device according to a first aspect of the present invention is a hydroponic method for at least one plant, including: a changing step of changing a cultivation condition value by a prescribed value, the cultivation condition value contributing to an increase and a decrease in CO₂ consumption amount by the at least one plant; a measuring step of measuring the CO₂ consumption amount per unit time period by the at least one plant; and a determining step of determining whether the CO₂ consumption amount is increased or decreased due to the changing step, by comparing the CO₂ consumption amounts obtained in the measuring steps before and after the changing step with each other, in which when the CO₂ consumption amount is determined to be increased in the determining step, the changing step after the determining step is executed by using the prescribed value used in the changing step before the determining step; when the CO₂ consumption amount is determined to be decreased in the determining step, the changing step after the determining step is executed by using another prescribed value with a positive or negative sign reversed from a positive or negative sign of the prescribed value used in the changing step before the determining step; when the cultivation condition value changed by using the prescribed value in the changing step is equal to or above a preset upper limit value, the cultivation condition value is replaced with the upper limit value; and when the cultivation condition value changed by using the prescribed value in the changing step is equal to or below a preset lower limit value, the cultivation condition value is replaced with the lower limit value.

A hydroponic method according to a second aspect of the present invention is a hydroponic method for at least one plant, including: a changing step of changing a cultivation condition value by a prescribed value, the cultivation condition value contributing to an increase and a decrease in CO₂ consumption amount by the at least one plant; a measuring step of measuring the CO₂ consumption amount per unit time period by the at least one plant; and a determining step of determining whether the CO₂ consumption amount is increased or decreased due to the changing step, by comparing the CO2 consumption amounts obtained in the measuring steps before and after the changing step with each other, in which when the CO₂ consumption amount is determined to be increased in the determining step, the changing step after the determining step is executed by using the prescribed value used in the changing step before the determining step; when the CO₂ consumption amount is determined to be decreased in the determining step, the changing step after the determining step is executed by using another prescribed value with a positive or negative sign reversed from a positive or negative sign of the prescribed value used in the changing step before the determining step; a determination as to whether or not the CO₂ consumption amount is changed due to the changing step is also made in the determining step; and when the CO₂ consumption amount is determined as not changed in the determining step, the changing step after the determining step is executed by using one of the prescribed value and the other prescribed value with the positive or negative sign reversed from the positive or negative sign of the prescribed value, the one of the prescribed values to be used being a value with which a power consumption amount required for cultivating the at least one plant is reduced.

A hydroponic device according to a first aspect of the present invention is a hydroponic device for at least one plant, including: a changing unit configured to change a cultivation condition value by a prescribed value, the cultivation condition value contributing to an increase and a decrease in CO₂ consumption amount by the at least one plant; a measuring unit configured to measure the CO₂ consumption amount per unit time period by the at least one plant; and a determining unit configured to determine whether the CO₂ consumption amount is increased or decreased due to the change by the changing unit, by comparing the CO₂ consumption amounts obtained by the measurement by the measuring unit before and after the change by the changing unit with each other, in which when the determining unit determines that the CO₂ consumption amount is increased, the change is executed by the changing unit after the determination by the determining unit by using the prescribed value used in the change by the changing unit before the determination by the determining unit; when the determining unit determines that the CO₂ consumption amount is decreased, the change is executed by the changing unit after the determination by the determining unit by using another prescribed value with a positive or negative sign reversed from a positive or negative sign of the prescribed value used in the change by the changing unit before the determination by the determining unit; when the cultivation condition value changed by the changing unit using the prescribed value is equal to or above a preset upper limit value, the cultivation condition value is replaced with the upper limit value; and when the cultivation condition value changed by the changing unit using the prescribed value is equal to or below a preset lower limit value, the cultivation condition value is replaced with the lower limit value.

A hydroponic device according to a second aspect of the present invention is a hydroponic device for at least one plant, including: a changing unit configured to change a cultivation condition value by a prescribed value, the cultivation condition value contributing to an increase and a decrease in CO₂ consumption amount by the at least one plant; a measuring unit configured to measure the CO₂ consumption amount per unit time period by the at least one plant; and a determining unit configured to determine whether the CO₂ consumption amount is increased or decreased due to the change by the changing unit, by comparing the CO₂ consumption amounts obtained by the measurement by the measuring unit before and after the change by the changing unit with each other, in which when the determining unit determines that the CO₂ consumption amount is increased, the change is executed by the changing unit after the determination by the determining unit by using the prescribed value used in the change by the changing unit before the determination by the determining unit; when the determining unit determines that the CO₂ consumption amount is decreased, the change is executed by the changing unit after the determination by the determining unit by using another prescribed value with a positive or negative sign reversed from a positive or negative sign of the prescribed value used in the change by the changing unit before the determination by the determining unit; the determining unit also determines whether or not the CO₂ consumption amount is changed due to the change by the changing unit; and when the determining unit determines that the CO₂ consumption amount is not changed, the changing unit executes the change after the determination by the determining unit by using one of the prescribed value and the other prescribed value with the positive or negative sign reversed from the positive or negative sign of the prescribed value, the one of the prescribed values to be used being a value with which a power consumption amount required for cultivating the at least one plant is reduced.

### EFFECT OF INVENTION

According to the present invention, it is possible to perform detailed management of cultivation condition values for hydroponic cultivation of a plant while maintaining cultivation conditions as much as possible for increasing a CO₂ consumption amount by the plant.

### BRIEF DESCRIPTION OF DRAWINGS

[Fig. 1] Fig. 1 is a schematic cross-sectional view for explaining an example of a hydroponic device according to an embodiment of the present invention.
[Fig. 2] Fig. 2 is a schematic cross-sectional view for explaining another example of the hydroponic device according to the embodiment of the present invention.
[Fig. 3] Fig. 3 is a graph for explaining a way to measure a CO₂ consumption amount used in a hydroponic method according to the embodiment of the present invention.
[Fig. 4] Fig. 4 is a flowchart for explaining an example of processing to be executed by a control unit of the hydroponic device according to the embodiment of the present invention.
[Fig. 5] Fig. 5 is a flowchart for explaining another example of the processing to be executed by the control unit of the hydroponic device according to the embodiment of the present invention.

### DESCRIPTION OF EMBODIMENTS

A hydroponic device and a hydroponic method according to an embodiment will be described below with reference to the drawings.

### (Plant to be cultivated)

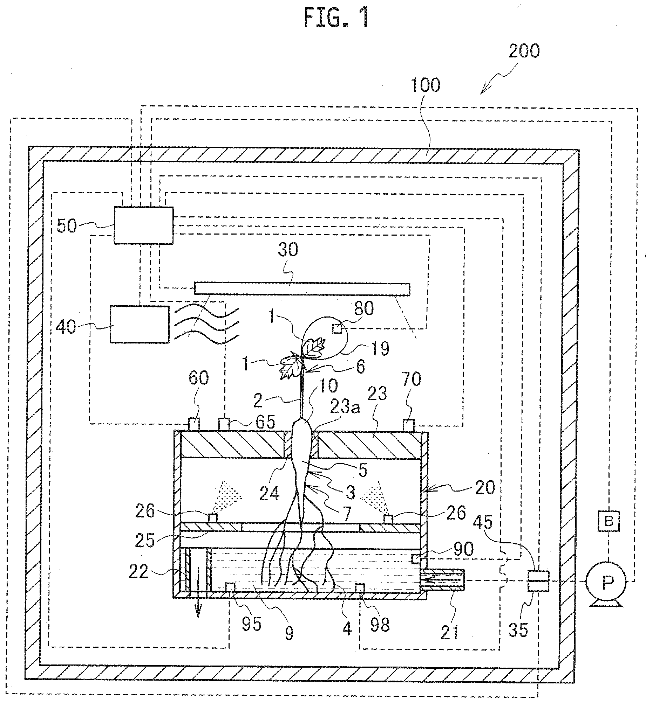

As shown in Fig. 1, a plant 3 is cultivated in accordance with the hydroponic method of this embodiment. The plant 3 includes an above-ground part 6 provided with leaves 1 and a stem 2, and an underground part 7 provided with roots 4 and an underground stem 5. For instance, the plant 3 is Panax ginseng (also known as Korean ginseng or Chinese ginseng) as a root crop whose underground part 7 swells up. It is to be noted, however, that Panax ginseng is merely an example of the plant to be cultivated, and any plants may be cultivated in accordance with the hydroponic method of this embodiment.

### (Structure of One Example of Hydroponic Device of Embodiment)

As shown in Fig. 1, an example of a hydroponic device 200 of this embodiment includes a housing 100 like a container having a hexahedral structure. Accordingly, the plant 3 grows in a space which is shielded from an external space by the housing 100. For this reason, an atmosphere inside the housing 100 is shielded from an atmosphere on the outside. Nonetheless, it is possible to introduce the outside air into the housing 100 and to discharge the air inside the housing 100 to the outside consciously by using an air conditioner and the like. Accordingly, the hydroponic device 200 can easily manage a surrounding environment of the plant 3. In the meantime, no outside light enters the housing 100. By opening and closing a door provided on a side face of the housing 100, an operator who cultivates the plant 3 can go out of the housing 100 through an opening provided thereto, and go into the housing 100 through the opening.

The hydroponic device 200 includes a culture tank 20 located inside the housing 100. While the plant 3 is cultivated, the culture tank 20 stores a nutrient solution 9 inside thereof. The nutrient solution 9 is supplied to the culture tank 20 through a supply tube 21 by using an irrigation device such as a pump P. The nutrient solution 9 is discharged to the outside from a drain pipe 22, which extends upward from a bottom face of the culture tank 20. As a consequence, a level of the nutrient solution 9 in the culture tank 20 is equal to or lower than a height of an upper end of the drain pipe 22 from the bottom face of the culture tank 20. Distal ends of the roots 4 of the plant 3 are immersed in the nutrient solution 9.

The culture tank 20 includes a support member 25, which is attached to a position at a predetermined height above an upper surface of the nutrient solution 9. The support member 25 supports nozzles 26 that spray the nutrient solution 9 to the plant 3. The nutrient solution 9 is supplied from the pump P to the nozzles 26 through pipes (not shown). Further, the nutrient solution 9 is sprayed from the nozzles 26 toward the plant 3. The sprayed nutrient solution 9 falls toward the nutrient solution 9 stored in the culture tank 20.

The culture tank 20 includes a ground surface portion 23 attached to a portion near an upper end opening of the culture tank 20. The ground surface portion 23 is provided with a through-hole 23a into which the plant 3 is inserted. A culture medium 24 is fitted into a gap between the through-hole 23a and the plant 3. The culture medium 24 is formed from a material such as sponge, which is flexible and capable of holding water. Thus, the plant 3 is supported by the ground surface portion 23 in the state where the culture medium 24 is interposed between the through-hole 23a and the plant 3.

### (Control System of Hydroponic Device of Embodiment)

The hydroponic device 200 of this embodiment includes detection units which detect cultivation condition values X, respectively. For example, the detection units include an ambient air temperature sensor 60 and the like, which will be described later in detail. Examples of the cultivation condition values X include respective values concerning the cultivation of the plant 3, namely, an ambient air temperature, an ambient air humidity , a concentration of carbon dioxide in the ambient air (hereinafter referred to as an "ambient air CO₂ concentration"), an irrigation time period, an irrigation interval, an amount of light irradiation, the length of a light period, the length of a dark period, a water temperature, electric conductivity (hereinafter referred to as an "EC (electric conductivity) value"), and a pH value. The cultivation condition values X are physical properties of a surrounding environment of the plant 3, which are involved in the cultivation of the plant 3. Any physical properties besides the above-mentioned physical properties may be used as the cultivation condition values X as long as such other physical properties contribute to an increase or a decrease in CO₂ consumption amount by the plant 3.

The hydroponic device 200 of this embodiment includes a CO₂ concentration sensor 80 serving as a measuring unit which measures the CO₂ consumption amount. The hydroponic device 200 of this embodiment includes a control unit 50. The control unit 50 controls instruments to change the cultivation condition values X based on the cultivation condition values X detected by the detection units such as the ambient air temperature sensor 60 and on information indicating the CO₂ consumption amount measured by the CO₂ concentration sensor 80.

In Fig. 1, the CO₂ concentration sensor 80 is installed in a bag 19, which is substantially gas-impenneable and is provided in such a way as to enclose a leaf 1 of the plant 3. For this reason, the CO₂ concentration sensor 80 detects a CO₂ concentration in a limited space around this leaf 1 of the plant 3 inside the bag 19. Accordingly, if the volume in the bag 19 is fixed to a specific value, then it is possible to measure a CO₂ consumption amount AC per unit time period by the plant 3 by means of measuring an amount of change in CO₂ concentration per unit time period. According to the hydroponic device 200 shown in Fig. 1, a CO₂ consumption amount by a particular plant 3 in the housing 100 is measured as a representative value of the CO₂ consumption amount AC.

Fig. 1 illustrates the bag 19 having the proper size for detecting the CO₂ concentration in the space around the single leaf 1 inside the bag 19. However, a different bag 19 which encloses the ambient air around multiple leaves 1 of the single plant 3 may be used instead. If CO₂ inside the bag 19 is depleted by the plant 3, the plant 3 will not be able to grow any longer. In this regard, the bag 19 may be regularly detached from the plant 3 so as to recover the CO₂ concentration inside the bag 19. Alternatively, in order to regularly recover the carbon dioxide concentration (hereinafter referred to as the "CO₂ concentration") inside the bag 19, a pipe may be inserted into the bag 19 and carbon dioxide (hereinafter referred to as "CO₂") may be supplied into the bag 19 through the pipe.

In this embodiment, the CO₂ consumption amount AC is defined as a value obtained by dividing a CO₂ consumption amount consumed in a prescribed time period by the prescribed time period, or in other words, as the CO₂ consumption amount per unit time period. In short, the CO₂ consumption amount AC is an average value of the CO₂ consumption amount within the prescribed time period. However, the CO₂ consumption amount AC does not need to be the average value as long as the CO₂ consumption amount AC can be used for comparing the CO₂ consumption amounts of the plant 3 with each other, i.e., amounts of photosynthesis thereof. In this embodiment, since the CO₂ consumption amount AC is the average value of the CO₂ consumption amount in the prescribed time period, it is possible to suppress a large change in measurement value of the CO₂ consumption amount attributable to a large instantaneous change in CO₂ concentration.

The ambient air temperature sensor 60 and a humidity sensor 70 are attached to the ground surface portion 23. The ambient air temperature sensor 60 and the humidity sensor 70 measure the temperature and the humidity of the ambient air in the space around the plant 3 in the housing 100, respectively. In the meantime, an illuminance sensor 65 which measures an illuminance around the plant 3 is disposed on the ground surface portion 23.

An EC sensor 95 which measures the EC value of the nutrient solution 9 and a pH sensor 98 which measures the pH value of the nutrient solution 9 are disposed on the bottom face of the culture tank 20. Meanwhile, a nutrient solution temperature sensor 90 which measures a water temperature, i.e., the temperature of the nutrient solution 9 is attached onto an inner side face of the culture tank 20.

The above-mentioned features are summarized as follows. Specifically, the hydroponic device 200 of this embodiment includes the ambient air temperature sensor 60, the illuminance sensor 65, and the humidity sensor 70. The hydroponic device 200 of this embodiment includes the CO₂ concentration sensor 80, the nutrient solution temperature sensor 90, the EC sensor 95, and the pH sensor 98. Pieces of information detected by the ambient air temperature sensor 60, the illuminance sensor 65, and the humidity sensor 70, respectively, are transmitted to the control unit 50 to be described later. Pieces of information detected by the CO₂ concentration sensor 80, the nutrient solution temperature sensor 90, the EC sensor 95, and the pH sensor 98, respectively, are transmitted to the control unit 50 to be described later.

The hydroponic device 200 of this embodiment includes the multiple instruments, each of which is capable of changing the corresponding one of the aforementioned cultivation condition values X. The instruments include an illumination instrument 30, an EC-value-changeable material injecting instrument 35, an air conditioner 40, a pH-value-changeable material injecting instrument 45, the pump P, a boiler B, and so forth. Upon receipt of the pieces of information on the cultivation condition values X sent from the respective sensors mentioned above, the control unit 50 controls the illumination instrument 30, the EC-value-changeable material injecting instrument 35, the air conditioner 40, the pH-value-changeable material injecting instrument 45, the pump P, and the boiler B, respectively.

The illumination instrument 30 includes a light source disposed above the plant 3, such as an LED (light emitting diode) and a fluorescent light tube. An output of the illumination instrument 30 is controlled by the control unit 50 in such a way as to change an irradiation time period and illuminance of the light irradiating the plant 3, respectively. The air conditioner 40 is set up in the space inside the housing 10. The air conditioner 40 is configured to change the temperature and the humidity of the ambient air around the plant 3 inside the housing 100. For this purpose, the air conditioner 40 includes a warm air blower, a cold air blower, a humidifier, and a dehumidifier, which are to be controlled by the control unit 50.

The pump P supplies the nutrient solution 9 in a tank (not shown) into the culture tank 20. In this embodiment, the pump P is provided outside the housing 100. However, the pump P may be provided inside the housing 100. The pump P is controlled by the control unit 50 in such a way as to change an irrigation time period and an irrigation interval of the nutrient solution 9 in the culture tank 20 based on a timing measured with a timer in the control unit 50. The boiler B is controlled by the control unit 50. Hence, the boiler B heats the nutrient solution 9 being sent from the tank (not shown) into the pump P, thereby changing the temperature of the nutrient solution 9 in the culture tank 20.

The EC-value-changeable material injecting instrument 35 is controlled by the control unit 50. Thus, the EC-value-changeable material injecting instrument 35 adjusts an amount of injection of a conductive material into the nutrient solution 9 for changing the EC value of the nutrient solution 9. The pH-value-changeable material injecting instrument 45 is controlled by the control unit 50. Thus, the pH-value-changeable material injecting instrument 45 adjusts an amount of injection of an acidic or alkaline material into the nutrient solution 9 for changing the pH value of the nutrient solution 9. Each of the EC-value-changeable material injecting instrument 35 and the pH-value-changeable material injecting instrument 45 is attached to a pipe that establishes communication between the pump P and the supply tube 21, which is illustrated with one of dashed lines in Fig. 1.

### (Structure of Other Example of Hydroponic Device of Embodiment)

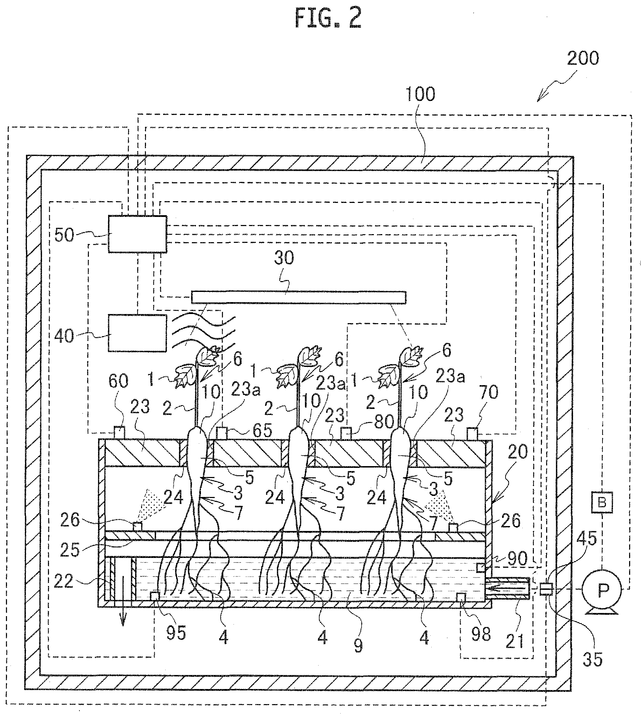

As shown in Fig. 2, in another example of the hydroponic device 200 of this embodiment, the ground surface portion 23 may be designed to be capable of cultivating multiple plants 3. In the other example, the ground surface portion 23 includes multiple through-holes 23a. The culture medium 24 is fitted into a gap between each of the through-holes 23a and each of the plants 3. As described previously, the culture medium 24 is formed from the material such as sponge, which is flexible and capable of holding water.

### (Control System of Other Example of Hydroponic Device of Embodiment)

The hydroponic device 200 of the other example shown in Fig. 2 is different from the hydroponic device 200 of the one example shown in Fig. 1 in that the CO₂ concentration sensor 80 is provided on the ground surface portion 23 in such a way as to measure the CO₂ consumption amount AC of the entire ambient air in the housing 100. Thus, according to the hydroponic device 200 of the other example shown in Fig. 2, the CO₂ consumption amount AC by all the plants 3 in the housing 100 is measured. Since the housing 100 isolates its inside space from its outside space, the CO₂ concentration is kept from being significantly changed due to an effect of the air outside the housing 100. For this reason, according to the hydroponic device 200 of the other example shown in Fig. 2, the CO₂ consumption amount AC representing an average value of all the plants 3 in the housing 100 can be measured at reasonably high accuracy. Moreover, if the volume of the space inside the housing 100 is obtained in advance in this case, then it is possible to derive the CO₂ consumption amount AC from the value of the volume and a measured amount of change in CO₂ concentration.

In the case of measuring the CO₂ consumption amount AC by the plants 3, the CO₂ consumption amounts of the ambient air around the leaves 1 in the bags 19 that enclose the leaves 1 of the plants 3, respectively, may be detected as in the hydroponic device 200 of the one example shown in Fig. 1. An average value of the Cho2 consumption amounts by the plants 3 is calculated as the CO₂ consumption amount AC in this case as well.

### (Measurement of CO₂ Consumption Amounts in One Example and Other Example of Hydroponic Devices of Embodiment)

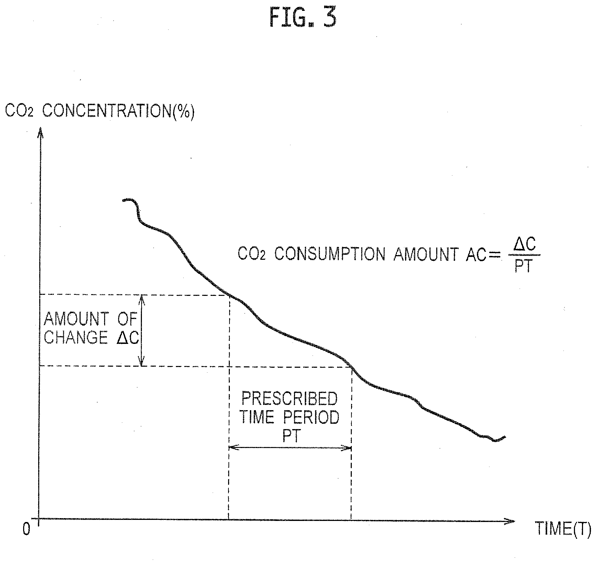

As shown in Fig. 3, in each of the hydroponic devices of the one example and the other example of the embodiment, data on the CO₂ concentration detected by the CO₂ concentration sensor 80 are transmitted in chronological order to the control unit 50. As seen in Fig. 3, the CO₂ concentration is changed by an amount of change ΔC in a prescribed time period PT. Accordingly, every time the prescribed time period PT is elapsed, the control unit 50 calculates the CO₂ consumption amount AC by dividing the amount of change ΔC in CO₂ concentration by the prescribed time period PT. In this way, it is possible to prevent frequent repetition of instantaneous changes in control mode of the control unit 50 to be described later, which is attributed to frequent occurrence of instantaneous changes in CO₂ concentration in the ambient air.

Instead of measuring the amount of change ΔC in CO₂ concentration within the prescribed time period PT in the ambient air around the plant 3 by using the CO₂ concentration sensor 80, the amount of change ΔC in CO₂ concentration near the surface of the leaf 1 of the plant 3 within the prescribed time period PT may be measured by using an infrared gas analyzer. The CO₂ consumption amount AC by part of the leaf 1 of the plant 3 is measured by the infrared gas analyzer. The step of measuring the CO₂ consumption amount AC by part of the leaf 1 of the plant 3 as described above is also included in the step of measuring the CO₂ consumption amount per unit time period by the plant 3 of this embodiment, because if the CO₂ consumption amounts AC by part of the leaf 1 of the plant 3 can be compared with each other, then it is possible to compare an increase or a decrease in amount of photosynthesis of the plant 3.

The infrared gas analyzer is an instrument capable of irradiating the leaf 1 of the plant 3 with infrared rays, for example, in a state where the leaf 1 is placed in a cell in which to dispose a sample for measurement. The infrared gas analyzer measures an amount of infrared rays absorbed by the leaf 1 of the plant 3. The amount of change ΔC in CO₂ concentration of the plant 3 is measured based on the measurement result, because the amount of change ΔC in CO₂ concentration within the prescribed time period PT in the ambient air around the leaf 1 varies with the amount of photosynthesis performed by the leaf 1, and the amount of infrared rays absorbed by the leaf 1 varies with the amount of photosynthesis performed by the leaf 1. In other words, the infrared gas analyzer is the instrument capable of indirectly specifying the amount of change ΔC in CO₂ concentration within the prescribed time period PT by using the amount of infrared rays absorbed by the leaf 1.

As with the CO₂ concentration sensor 80, the infrared gas analyzer can also measure the CO₂ consumption amount AC by the plant 3 in a non-destructive manner. An example of a plant photosynthesis integrated analysis system equipped with the infrared gas analyzer is a system specified by a product name LI-6400XT (manufactured by LI-COR, Inc.). In this case as well, data on the amount of change ΔC in CO₂ concentration within the prescribed time period PT measured by the infrared gas analyzer may be transmitted to the control unit 50, and the control unit 50 may calculate the CO₂ consumption amount AC. Alternatively, an operator may grasp the amount of change ΔC in CO₂ concentration within the prescribed time period PT measured by the infrared gas analyzer, and the cultivation condition values X may be changed by operation of the instruments by the operator.

### (CO₂ Consumption Amount Increase Processing)

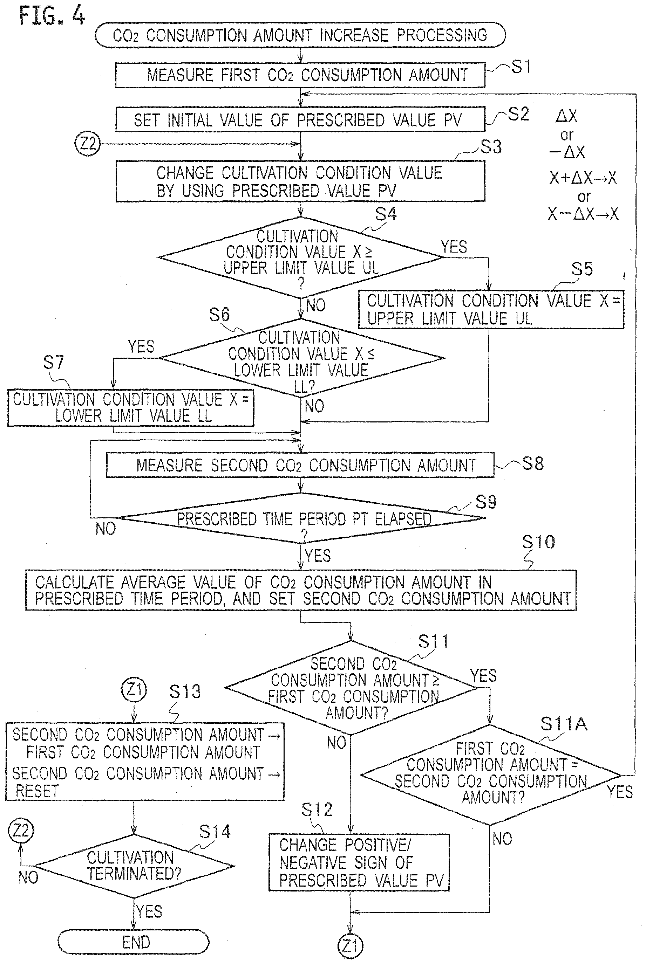

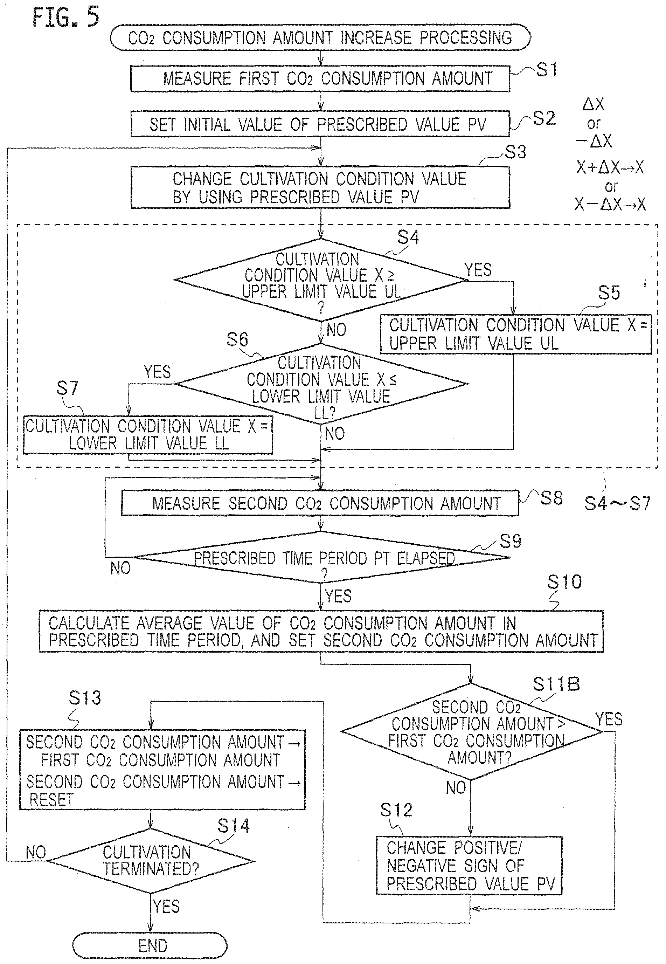

Next, an example of a CO₂ consumption amount increase processing to be executed by the control unit 50 of the hydroponic device 200 of the one example or the other example will be described by using Fig. 4. In addition, another example of the CO₂ consumption amount increase processing will be described by using Fig. 5. In Fig. 4, the control unit 50 executes steps S11 and S11A in the processing. On the other hand, in Fig. 5, the control unit 50 executes step S11B in the processing. This point is the only difference between the CO₂ consumption amount increase processing of the one example shown in Fig. 4 and the CO₂ consumption amount increase processing of the other example shown in Fig. 5.

As shown in Fig. 4, in step S1, the control unit 50 calculates the average value of the CO₂ consumption amount by using the data on the CO₂ concentration transmitted from the CO₂ concentration sensor 80. Thus, a measurement result of a first CO₂ concentration amount AC is obtained. Next, in step S2, the control unit 50 sets an initial value of a prescribed value PV for changing a certain cultivation condition value X. The initial value is either a positive value ΔX or a negative value -ΔX. The initial value of the cultivation condition value X will be described later in detail.

As shown in Fig. 4, in step S3, the control unit 50 changes one of the aforementioned cultivation condition values X by using the initial value (ΔX or -ΔX) of the prescribed value PV. The cultivation condition value X is changed to X+ΔX or X-ΔX. As described previously, the cultivation condition value X is any one of the ambient air temperature, the ambient air humidity , the ambient air CO₂ concentration, the irrigation time period, the irrigation interval, the amount of light irradiation, the length of the light period, the length of the dark period, the water temperature, the EC value, and the pH value. By changing the cultivation condition value X, the plant 3 will be cultivated under an environment after the change, which is different from an environment before the change. As a consequence, the CO₂ consumption amount AC by the plant 3 will be changed in general.

Specific procedures in the step of changing the cultivation condition value X shown in the aforementioned step S3 will be explained by taking the ambient air temperature of the space inside the housing 100 as an example of the cultivation condition value X. For instance, when the initial value of the ambient air temperature around a certain plant 3 is 20°C, the plant 3 is cultivated for a period equal to the prescribed time period PT under the cultivation condition of the ambient air temperature equal to 20°C. The CO₂ consumption amount AC by the plant 3 in the prescribed time period PT is measured. The prescribed time period PT is a value that can be changed depending on the type of the plant 3, and may take any value such as one hour, one day, and one week.

First, the CO₂ consumption amount AC by the plant 3 in the prescribed time period PT is measured in the state where the cultivation condition value X is set to the initial value. Next, the cultivation condition value X is changed by an amount equal to the prescribed value PV. The prescribed value PV is, for example, a value that can be changed depending on the type of the plant 3, and may take any value such as ±0.1°C, ±0.5°C, and ±1°C, for example. Thereafter, the CO₂ consumption amount AC by the plant 3 in the prescribed time period PT is measured under the environment where the cultivation condition value X after the change = the cultivation condition value X before the change + the prescribed value PT holds true.

As a consequence, when the CO₂ consumption amount AC after the change of the cultivation condition value X is greater than the CO₂ consumption amount AC before the change of the cultivation condition value X, the plant 3 will be cultivated under the environment with the cultivation condition value X after the change. In this case, if the prescribed value PV is assumed to be equal to +1°C, then the ambient air temperature as the new cultivation condition value X is set to 21°C, for example. On the other hand, when the CO₂ consumption amount AC after the change of the cultivation condition value X is smaller than the CO₂ consumption amount AC before ' the change of the cultivation condition value X, the cultivation condition value X is changed by using a prescribed value (= -1°C), which has the same absolute value as the previous prescribed value PV but the opposite one of the positive and negative signs to that of the previous prescribed value PV. As a consequence, the ambient air temperature as the new cultivation condition value X is set to 19°C, for example.

Next, in step S4, the control unit 50 determines whether or not the changed cultivation condition value X is equal to or above a preset upper limit value UL. When the changed cultivation condition value X is equal to or above the preset upper limit value UL in step S4, the control unit 50 replaces the changed cultivation condition value X with the upper limit value UL in step S5. After the processing in step S5, processing in step S8 is executed.

When the changed cultivation condition value X is smaller than the preset upper limit value UL in step S4, the control unit 50 determines whether or not the changed cultivation condition value X is equal to or below a lower limit value LL in step S6. When the changed cultivation condition value X is equal to or below the preset lower limit value LL in step S6, the control unit 50 replaces the changed cultivation condition value X with the lower limit value LL in step S7. After the processing in step S7, the processing in step S8 is executed.

According to the processing in steps S4 to S7 shown in Fig. 4, the cultivation condition value X neither exceeds the upper limit value UL nor falls below the lower limit value LL. The upper limit value UL and the lower limit value LL are a maximum value and a minimum value in a range of the cultivation condition value X suitable for cultivating the plant 3, respectively. As a consequence, the cultivation condition value X is prevented from becoming too large a value or too small a value unsuitable for cultivating the plant 3. For example, the ambient air temperature around the plant 3 is prevented from becoming an excessively high temperature or an excessively low temperature unsuitable for cultivating the plant 3.

Depending on the performance of the instrument for changing the cultivation condition value X, there may be a case where the cultivation condition value X naturally falls within the range from the upper limit value UL to the lower limit value LL thereof. In this case, the above-mentioned processing in steps S4 to S7 is not the processing required to be executed by the control unit 50. In other words, the processing in steps S4 to S7 is the processing to be added as needed to the control unit 50 of the one example of the hydroponic device 200 of this embodiment. Accordingly, regarding the other example of the hydroponic device 200 of this embodiment shown in Fig. 5, the processing in steps S4 to S7 surrounded by dash lines may be deleted from the CO₂ consumption amount increase processing.

Next, in step S8 as shown in Fig. 4, the control unit 50 calculates the CO₂ consumption amount by using the data on the CO₂ concentration transmitted from the CO₂ concentration sensor 80. Thus, a second CO₂ consumption amount AC is measured. Specifically, in step S9, the control unit 50 determines whether or not elapsed time counted with a timer embedded therein has reached the prescribed time period PT. The prescribed time period PT represents time elapsed from the latest change of the cultivation condition value X.

When the elapsed time is determined to be yet to reach the prescribed time period PT in step S9, the measurement of the second CO₂ consumption amount AC is continued in step S8. In other words, the CO₂ concentration sensor 80 repeats acquisition of the data on the CO₂ concentration.

When the elapsed time is determined to have reached the prescribed time period PT in step S9, the control unit 50 divides the amount of change ΔC in CO₂ concentration within the prescribed time period PT by the prescribed time period PT, and thus calculates the average value of the multiple pieces of data on the CO₂ concentration in step S10. Thus, the CO₂ consumption amount per unit time period is calculated as the second CO₂ consumption amount AC.

As shown in Fig. 4, in step S11, the control unit 50 determines whether or not the second CO₂ consumption amount AC is equal to or above the first CO₂ consumption amount AC. When the second CO₂ consumption amount AC turns out to be smaller than the first CO₂ consumption amount AC in step S11, the control unit 50 replaces the positive or negative sign of the prescribed value PV with the other in step S12. Specifically, the control unit 50 considers that the CO₂ consumption amount AC is decreased due to the change of the cultivation condition value X, and hence replaces the increase in cultivation condition value X with the decrease in cultivation condition value X. After the processing in step S12, the control unit 50 executes processing in step S 13.

On the other hand, there may be a case in step S11 where the control unit 50 determines that the second CO₂ consumption amount AC is equal to or above the first CO₂ consumption amount AC. In this case, a determination is made in step S 11 A as to whether or not the first CO₂ consumption amount AC is equal to the second CO₂ consumption amount AC. Specifically, the control unit 50 determines whether or not there is no change of the CO₂ consumption amount AC attributed to the change of the cultivation condition value X.

When the first CO₂ consumption amount AC is determined to be equal to the second CO₂ consumption amount AC in step S11A, the control unit 50 executes the processing to set the prescribed value PV equal to the initial value again in the processing in step S2. On the other hand, when the first CO₂ consumption amount AC is determined to be not equal to the second CO₂ consumption amount AC in step S11A, the control unit 50 executes processing in step S13 without executing the processing in step S12. In other words, the control unit 50 considers that the CO₂ consumption amount AC is increased due to the change of the cultivation condition value X, and hence executes the processing for continuing the control to increase or decrease the cultivation condition value X.

Thereafter, in step S13, the first CO₂ consumption amount AC is replaced with the second CO₂ consumption amount AC, and the second CO₂ consumption amount AC is reset. A CO₂ consumption amount AC to be newly measured in the next step S8 will take over the second CO₂ consumption amount AC.

In step S14, the control unit 50 determines whether or not the cultivation of the plant 3 is terminated. The determination as to whether or not the cultivation of the plant 3 is terminated is made based on whether or not the operator turns off a switch to drive the hydroponic device 200. When the control unit 50 determines that the cultivation of the plant 3 is terminated in step S14, the CO₂ consumption amount increase processing is terminated. When the control unit 50 determines that the cultivation of the plant 3 is yet to be terminated in step S 14, the control unit 50 executes the processing in step S3 again.

### (When First CO₂ Consumption Amount AC Is Equal to Second CO₂ Consumption Amount AC)

The above-mentioned case where the first CO₂ consumption amount AC is equal to the second CO₂ consumption amount AC need not be limited only to a case where numerical values of the first CO₂ consumption amount AC and the second CO₂ consumption amount AC completely agree with each other. The above-mentioned case where the first CO₂ consumption amount AC is equal to the second CO₂ consumption amount AC may also include a case where a difference between the first CO₂ consumption amount AC and the second CO₂ consumption amount AC falls within a certain range. This makes it possible to perform processing to be described later for reducing power consumed by the hydroponic device when the degree of increase or decrease in the CO₂ consumption amount AC attributed to the change of the cultivation condition value X is small.

### (Initial Values of Cultivation Condition Values)

The positive or negative sign of the above-mentioned initial value of the prescribed value PV is determined in advance, so that an amount of power consumed by the hydroponic device 200 for cultivating the plant 3 can be reduced by changing the cultivation condition value X.

When the cultivation condition value X is the ambient air temperature, the power consumed by the hydroponic device 200 is reduced by turning down outputs of cooling and heating units of the air conditioner 40. Accordingly, the initial value is determined to be any of the positive value ΔX and the negative value -ΔX in this case depending on the way of control in order to turn down the output of the air conditioner 40. For example, if the output of the air conditioner 40 is turned down so as to raise the ambient air temperature during a cooling operation, the power consumption by the cooling unit of the air conditioner 40 is reduced. Accordingly, during the cooling operation, the initial value of the prescribed value PV for changing the ambient air temperature has the positive value ΔX. For example, if the output of the air conditioner 40 is turned down so as to lower the ambient air temperature during a heating operation, the power consumption by the heating unit of the air conditioner 40 is reduced. During the heating operation, the initial value of the prescribed value PV for changing the ambient air temperature may have the negative value -ΔX. In other words, the sign of the initial value of the prescribed value PV for changing the ambient air temperature may be reversed between the cooling operation and the heating operation.

When the cultivation condition value X is the ambient air humidity, the power consumed by the hydroponic device 200 is reduced by turning down an output of a humidifying unit or a dehumidifying unit of the air conditioner 40 in operation. Accordingly, the initial value is determined to be any of the positive value ΔX and the negative value -ΔX in this case depending on the way of control in order to turn down the output of the humidifying unit or the dehumidifying unit of the air conditioner 40 in operation. For example, if the output of the humidifying unit of the air conditioner 40 is turned down so as to lower the ambient air humidity during a humidifying operation, the power consumption by the humidifying unit of the air conditioner 40 is reduced. Accordingly, during the humidifying operation, the initial value of the prescribed value PV for changing the ambient air humidity has the negative value -ΔX. For example, if the output of the dehumidifying unit of the air conditioner 40 is turned down so as to raise the ambient air humidity during a dehumidifying operation, the power consumption by the dehumidifying unit of the air conditioner 40 is reduced. Accordingly, during the dehumidifying operation, the initial value of the prescribed value PV for changing the ambient air humidity has the positive value ΔX. In other words, the sign of the initial value of the prescribed value PV may be reversed between the humidifying operation and the dehumidifying operation.

When the cultivation condition value X is the irrigation time period, the power consumed by the hydroponic device 200 is reduced by shortening overall driving periods of the pump P. Accordingly, the initial value of the prescribed value PV for changing the irrigation time period is determined to be the negative value -ΔX.

When the cultivation condition value X is the irrigation interval, the power consumed by the hydroponic device 200 is reduced by lengthening intervals between the overall driving periods of the pump P, i.e., suspension periods of the pump P. Accordingly, the initial value of the prescribed value PV for changing the irrigation interval is determined to be the positive value ΔX.

When the cultivation condition value X is the water temperature, i.e., the temperature of the nutrient solution 9, the power consumed by the hydroponic device 200 is reduced by turning down an output of the boiler B so as to lower the water temperature, i.e., the temperature of the nutrient solution 9. Accordingly, the initial value for changing the temperature of the nutrient solution 9 (the water temperature) is determined to be the negative value -ΔX. However, if a refrigerator is provided for lowering the temperature of the nutrient solution 9, then the refrigerator needs to be operated in such a way as to raise the temperature of the nutrient solution 9 in order to turn down the output of the refrigerator. Accordingly, the initial value of the prescribed value PV for changing the water temperature is determined to be the positive value ΔX in this case.

When the cultivation condition value X is an amount of light from the illumination instrument 30 which irradiates the plant 3, i.e., the amount of light irradiation, the power consumed by the hydroponic device 200 is reduced by shortening a period for turning the illumination instrument 30 on. Accordingly, the initial value of the prescribed value PV for changing the amount of light irradiation is determined to be the negative value -ΔX.

When the cultivation condition value X is a period for which the plant 3 is irradiated with the light from the illumination instrument 30, i.e., the length of the light period, the power consumed by the hydroponic device 200 is reduced by shortening the light period. Accordingly, the initial value of the prescribed value PV for changing the length of the light period is determined to be the negative value -ΔX.

When the cultivation condition value X is a period for which the plant 3 is kept from being irradiated with the light from the illumination instrument 30, i.e., the length of the dark period, the power consumed by the hydroponic device 200 is reduced by lengthening the dark period. Accordingly, the initial value of the prescribed value PV for changing the length of the dark period is determined to be the positive value ΔX.

There may also be a case where the cultivation condition value X is any one of the ambient air CO₂ concentration, the EC value, and the pH value. In any of these cases, an output of the instrument that can change the corresponding one of the cultivation condition values X needs to be turned down in order to reduce the power consumed by the hydroponic device 200. Accordingly, the initial value of the prescribed value PV is determined to be any of the positive value ΔX and the negative value -ΔX so as to turn down the output of the instrument that can change the cultivation condition value X. However, a cultivation condition value X cannot be changed in the case where the power consumption is inevitably increased as a consequence of the change of the cultivation condition value X. In this context, the cultivation condition values X which are capable of reducing the power consumption are limited to specific physical properties.

### (Other Example of CO₂ Consumption Amount Increase Processing)

The processing in steps S11 and S11A described by using Fig. 4 may be replaced with step S11B shown in Fig. 5. In other words, step S11A shown in Fig. 4 does not have to be carried out. To be more precise, the processing to determine whether or not the second CO₂ consumption amount AC is equal to the first CO₂ consumption amount AC need not be carried out. In this case, as shown in Fig. 5, the control unit 50 determines whether or not the second CO₂ consumption amount AC is greater than the first CO₂ consumption amount AC in step S11B.

When the second CO₂ consumption amount AC is greater than the first CO₂ consumption amount AC in step S11B shown in Fig. 5, the control unit 50 replaces the first CO₂ consumption amount AC with the second CO₂ consumption amount AC and resets the second CO₂ consumption amount AC in step S13. On the other hand, when the second CO₂ consumption amount AC is smaller than the first CO₂ consumption amount AC or when the second CO₂ consumption amount AC is equal to the first CO₂ consumption amount AC in step S11B, the control unit 50 replaces the positive or negative sign of the prescribed value PV with the other in step S12.

Nevertheless, in step S11B shown in Fig. 5, the control unit 50 may determine whether or not the second CO₂ consumption amount AC is equal to or above the first CO₂ consumption amount AC. In this case, in step S11B shown in Fig. 5, the second CO₂ consumption amount AC may be equal to the first CO₂ consumption amount AC. In such a case, the control unit 50 replaces the first CO₂ consumption amount AC with the second CO₂ consumption amount AC and resets the second CO₂ consumption amount AC in step S 13, without executing step S12 to replace the positive or negative sign of the prescribed value PV with the other.

The above-described processing of step S11B shown in Fig. 5 also makes it possible to determine whether the CO₂ consumption amount AC is increased or decreased due to the change of the cultivation condition value X by the amount equal to the prescribed amount PV (= ΔX or -ΔX).

### (Hydroponic Method Executed by Person or Unit Other than Control Unit)

In the above-mentioned hydroponic method of this embodiment, each of the changing step S3, the measuring steps S8 to S10, and the determining steps S11, S11A, and S11B is executed by the control unit 50 of the above-described hydroponic device 200. However, each of the changing step S3, the measuring steps S8 to S10, and the determining steps S11, S11A, and S11B may be executed by the operator instead of the control unit 50. In the hydroponic method of this embodiment, all the steps S1 to S14 do not always have to be executed by the mechanical device. Part of the steps in the hydroponic method of this embodiment may be executed by the operator.

### (Advantages of Hydroponic cultivation of Embodiment)

According to the hydroponic device 200 of the above-described embodiment, it is possible to cultivate the plant 3 while automatically selecting the cultivation condition value X that can optimize the CO₂ consumption amount AC. As a consequence, according to the hydroponic device 200 of the embodiment, it is possible to maintain the cultivation condition value over the entire period of the growth of the plant 3, the cultivation condition value being capable of improving culture efficiency of the plant 3, or the roots (the underground part 7) thereof in particular.

In general, the cultivation condition value X, which accelerates the growth of the underground part of the plant 3 such as the roots (the underground part 7), varies depending on the growth stage of the plant 3. To deal with this variation, the hydroponic device 200 of this embodiment repeatedly re-sets the cultivation condition value X to a better value for the growth of the plant 3 every time the prescribed time period PT is elapsed. Thus, according to the hydroponic device 200 of this embodiment, it is possible to keep the cultivation condition value X for the plant 3 at more appropriate values throughout its cultivation time period.

### (Object of Hydroponic Method and Hydroponic Device of Embodiment)

Neither Patent Literature 1 nor Patent Literature 2 discloses how to maintain a cultivation condition value within a range from its upper limit value to its lower limit value while increasing a CO₂ consumption amount. Hence, in a certain situation, the cultivation condition value, such as the temperature, for the plant may be changed to an improper value for the growth of the plant if using the techniques disclosed in Patent Literature 1 and Patent Literature 2. In other words, these techniques cannot perform detailed management of the hydroponic cultivation of the plant.

Meanwhile, in another situation, the cultivation condition value for the plant may be changed to an improper value from the energy saving point of view if using the aforementioned techniques disclosed in Patent Literature 1 and the Patent Literature 2. In other words, putting the priority on the increase in CO₂ consumption amount may lead to an undesirable increase in power consumption by the hydroponic device for cultivating the plant. These techniques fail to perform detailed management of the cultivation condition value of the hydroponic cultivation of the plant in this case as well.

### (Characteristic Features of Hydroponic Method and Device of Embodiment, and Effect Obtained Therefrom)

The hydroponic method and the hydroponic device of this embodiment are proposed in order to achieve the aforementioned object. The characteristic features of the hydroponic method and the hydroponic device of this embodiment, and effects to be obtained by the characteristic features will be described below.

### (Preconditions for Hydroponic Method of Embodiment)

The hydroponic method of this embodiment includes the following steps as shown in Figs. 4 and 5.

The hydroponic method of this embodiment is a hydroponic method for at least one plant 3. The hydroponic method of this embodiment includes the changing step S3 of changing the cultivation condition value X, which contributes to the increase and the decrease in CO₂ consumption amount AC by the at least one plant 3, by the prescribed amount PV (= ΔX or -ΔX). The hydroponic method of this embodiment includes the measuring steps S8 to S10 of measuring the CO₂ consumption amount AC per unit time period by the at least one plant 3.

In the hydroponic method of this embodiment, the CO₂ consumption amounts AC obtained in the measuring steps S8 to S10 before and after the changing step S3 are compared with each other. Hence, in the determining steps S11 and S11A or in the determining step S11B, it is determined whether the CO₂ consumption amount AC is increased or decreased due to the changing step S3.

There may be a case where the CO₂ consumption amount AC is determined to be increased in the determining steps S11 and S11A or in the determining step S11B. In this case, the changing step S3 after the determining steps S11 and S11A or the determining step S11B is executed by using the prescribed value PV (= ΔX or -ΔX) used in the changing step S3 before the determining steps S11 and S11A or the determining step S11B.

Meanwhile, there may be a case where the CO₂ consumption amount AC is determined to be decreased in the determining steps S11 and S11A or in the determining step S11B. Here, the prescribed value PV (=-ΔX or ΔX) with the positive or negative sign reversed from that of the prescribed value PV (= ΔX or -ΔX) used in the changing step S3 before the determining steps S11 and S11A or the determining step S11B is used in this case. The changing step S3 after the determining steps S11 and S11A or the determining step S11B is executed in this way.

The cultivation condition value X may be any one of the ambient air temperature, the ambient air humidity, the ambient air CO₂ concentration, the irrigation time period, the irrigation interval, the amount of light irradiation, the length of the light period, the length of the dark period, the water temperature, the EC value, and the pH value. Any one of the cultivation condition values X cited above may be changed in the changing step S3.

According to the method provided with the above-mentioned preconditions, it is possible to perform the hydroponic cultivation of the plant 3 while maintaining the cultivation condition as much as possible for increasing the CO₂ consumption amount AC by the plant 3. The characteristic features of the hydroponic method of this embodiment will be described below.
(1) As shown in Figs. 4 and 5, in the hydroponic method of this embodiment, there may be a case where the value changed by using the prescribed value ΔX in the changing step S3 is equal to or above the preset upper limit value UL. In this case, the cultivation condition value X is replaced with the upper limit value UL. Meanwhile, there may be a case where the value changed by using the prescribed value -ΔX in the changing step S3 is equal to or below the preset lower limit value LL. In this case, the cultivation condition value X is replaced with the lower limit value LL.
   According to the above-described method, even when the cultivation condition value X is changed so as to increase the CO₂ consumption amount AC by the plant 3, the cultivation condition value X does not become a value outside the range from the upper limit value UL to the lower limit value LL. In other words, the cultivation condition value X is maintained at the value within the range appropriate for cultivating the plant 3. Accordingly, it is possible to perform the hydroponic cultivation of the plant 3 under the surrounding environment with the appropriate cultivation condition value X while maintaining the cultivation condition as much as possible for increasing the CO₂ consumption amount AC by the plant 3.
   Note that the above-mentioned expressions "to replace the cultivation condition value with the upper limit value" and "to replace the cultivation condition value with the lower limit value" mean "to use the upper limit value as the cultivation condition value" and "to use the lower limit value as the cultivation condition value", respectively. Meanwhile, the absolute values of the above-described prescribed value and of the prescribed value with the positive or negative sign reversed therefrom may be equal to or different from each other.
(2) As shown in Fig. 4, in the hydroponic method of this embodiment, the determination as to whether or not the CO₂ consumption amount AC is changed due to the changing step S3 is also made in the determining steps S 11 and S11A. At this time, there may be a case where the CO₂ consumption amount AC is determined as not changed even after the cultivation condition value X is changed by the amount equal to the prescribed value PV ΔX or -ΔX. In this case, any one of the prescribed value PV (= ΔX or -ΔX) and the prescribed value PV (= -ΔX or ΔX) with the positive or negative sign reversed from that of the prescribed value PV (= ΔX or -Δx) is used (step S 12). In other words, the changing step S3 after the determining steps S8 to S10 is executed by using one of these values. The one of these values mentioned above is such a value with which a power consumption amount W required for cultivating the at least one plant 3 is reduced due to the changing step S3.
   In the above-described method, when the CO₂ consumption amount AC by the plant 3 is not changed even after the cultivation condition value X is changed, it is uncertain whether the cultivation condition value X is supposed to be increased or decreased. In this case, the cultivation condition value X is changed by using the prescribed value with which the power consumption by the plant 3 can be reduced. For this reason, according to the above-described method, it is possible to reduce the power consumption amount W while maintaining the cultivation condition as much as possible for increasing the CO₂ consumption amount AC by the plant 3. Note that the cultivation condition value X selected herein is the one which can reduce the power consumption amount W as a consequence of the increase or decrease thereof.
   The initial value of the aforementioned prescribed value may be set to any one of the values described above. In this way, a power saving effect is enhanced because the reduction in power consumption amount W is always attempted at the start of the hydroponic cultivation.
   As shown in Fig. 5, the determination as to whether or not the CO₂ consumption amount AC is changed due to the change of the cultivation condition value X by the prescribed value PV (= ΔX or -ΔX) does not have to be made in the determining step S11B. In this way, the control of the hydroponic device 200 is simplified. Here again, there may be the case where the CO₂ consumption amount AC is not changed even after the cultivation condition value X is changed by the amount equal to the prescribed value PV (= ΔX or -ΔX). In this case, the cultivation condition value X may be changed in the next changing step S3 by using any one of the prescribed value ΔX and the prescribed value PV (= -ΔX or ΔX) with the positive or negative sign reversed from that of the prescribed value PV (= ΔX or -ΔX).
   As shown in Fig. 5, in order to simplify the control, the determination as to whether or not the CO₂ consumption amount AC is changed due to the change of the cultivation condition value X by the prescribed value PV (= ΔX or -ΔX) does not have to be made in the determining step S11B. Here, there may be the case where the CO₂ consumption amount AC is not changed even after the cultivation condition value X is changed by the amount equal to the prescribed value PV (= ΔX or -ΔX). In this case, the cultivation condition value X may be changed in the next changing step S3 by using any one of the prescribed value PV (= ΔX or -ΔX) and the prescribed value PV (= -ΔX or ΔX) with the positive or negative sign reversed from that of the prescribed value PV (= ΔX or -ΔX).
(3) In the hydroponic method of this embodiment, the at least one plant 3 may be cultivated in the space inside the housing 100 that surrounds the entirety of the at least one plant 3 in a tightly sealing manner. In this case, the CO₂ consumption amount AC may be calculated based on the amount of change ΔC in CO₂ concentration within the prescribed time period PT in the space inside the housing 100 in the measuring steps S8 to S10.
   According to the above-described method, the CO₂ consumption amount AC can be accurately measured more easily than a case of measuring the CO₂ consumption amount AC in a space that is not tightly sealed.
(4) In the measuring steps S8 to S10, the CO₂ consumption amount AC may be calculated based on the amount of change ΔC in CO₂ concentration within the prescribed time period PT in a tightly sealed space around at least one leaf 1 of the at least one plant 3.

According to the above-described method, the CO₂ consumption amount AC can be accurately measured more easily than a case of measuring the CO₂ consumption amount AC in a larger space that is not tightly sealed.

The tightly sealed space around the leaf 1 may be a space defined by containing only the leaf 1 in the member such as the bag 19 without containing the stem 2 therein. Alternatively, the tightly sealed space around the leaf 1 may be a space defined by containing the leaf 1 and the stem 2 in the member such as the bag 19. Although the member is preferably flexible, the member is not limited only to a flexible material.

### (Preconditions for Hydroponic Device of Embodiment)

The hydroponic device of this embodiment includes the following configuration as shown in Figs. 4 and 5.

The hydroponic device 200 of this embodiment is a hydroponic device for at least one plant 3. The hydroponic device 200 of this embodiment includes a changing unit (step S3) which changes the cultivation condition value X by the prescribed amount PV (= ΔX or -ΔX). The hydroponic device 200 of this embodiment includes a measuring unit (steps S8 to S10) which measures the CO₂ consumption amount AC per unit time period by the at least one plant 3.

In the hydroponic device 200 of this embodiment, the CO₂ consumption amounts AC obtained by the measurement by the measuring unit (steps S8 to S10) before and after the change by the changing unit (step S3) are compared with each other. Thus, a determining unit (steps S11 and S11A or step S11B) determines whether the CO₂ consumption amount AC is increased or decreased due to the change by the changing unit.

When the determining unit determines that the CO₂ consumption amount AC is increased, the change is executed by the changing unit after the determination by the determining unit by using the prescribed value PV (= ΔX or -ΔX) used in the change by the changing unit before the determination by the determining unit. Meanwhile, there may be a case where the determining unit determines that the CO₂ consumption amount AC is decreased. Here, the prescribed value PV (= -ΔX or ΔX) with the positive or negative sign reversed from that of the prescribed value PV (= ΔX or -ΔX) used in the change by the changing unit before the determination by the determining unit is used in this case. Thus, the change by the changing unit is executed after the determination by the determining unit.

The cultivation condition value X may be any one of the ambient air temperature, the ambient air humidity, the ambient air CO₂ concentration, the irrigation time period, the irrigation interval, the amount of light irradiation, the length of the light period, the length of the dark period, the water temperature, the EC value, and the pH value. Any one of the cultivation condition values X cited above may be changed by the changing unit.

According to the hydroponic device provided with the above-mentioned preconditions, it is possible to perform the hydroponic cultivation of the plant 3 while maintaining the cultivation condition as much as possible for increasing the CO₂ consumption amount AC by the plant 3.
(1) In the hydroponic device 200 of this embodiment, there may be a case where the cultivation condition value X changed by the changing unit using the prescribed value PV (= ΔX or -ΔX) is equal to or above the preset upper limit value UL. In this case, the cultivation condition value X is replaced with the upper limit value UL. Meanwhile, there may be a case where the cultivation condition value X changed by the changing unit using the prescribed value PV (= ΔX or -ΔX) is equal to or below the preset lower limit value LL. In this case, the cultivation condition value X is replaced with the lower limit value LL.
   According to the above-described configuration, it is possible to perform the hydroponic cultivation of the plant 3 under the surrounding environment with the appropriate cultivation condition value X while maintaining the cultivation condition as much as possible for increasing the CO₂ consumption amount AC by the plant 3.
(2) In the hydroponic device 200 of this embodiment, the determining unit (steps S11 and S11A) also determines as to whether or not the CO₂ consumption amount AC is changed due to the change of the cultivation condition value X by the amount equal to the prescribed value PV (= ΔX or -ΔX). At this time, there may be a case where the CO₂ consumption amount AC is determined as not changed even after the cultivation condition value X is changed by the amount equal to the prescribed value PV Here, any one of the prescribed value PV (= ΔX or -ΔX) and the prescribed value PV (= -WAX or Wax) with the positive or negative sign reversed from that of the prescribed value PV (= ΔX or -ΔX) is used in this case. The change by the changing unit after the determination by the determining unit is executed by using one of these values. The one of these values mentioned above is such a value with which the power consumption amount W required for cultivating the at least one plant 3 is reduced due to the change by the changing unit.

According to the above-described configuration, it is possible to reduce the power consumption amount W while maintaining the cultivation condition as much as possible for increasing the CO₂ consumption amount AC by the plant 3. Note that the cultivation condition value X selected herein is the one which can reduce the power consumption amount W as a consequence of the increase or decrease thereof.

It is to be noted that the above-described embodiment is one example of the present invention. In this context, the present invention is not limited to the above-described embodiment. Besides this embodiment, various changes are naturally possible in light of the design and the like within the range not departing from the technical ideas according to the present invention.

This application claims the benefit of priority based on Japanese Patent Application No. 2014-134274 filed on June 30, 2014, and the entire contents described in this Japanese Patent Application are incorporated herein by reference.

### REFERENCE SINGS LIST

- 3: Plant
- 10: Housing
- 19: Bag
- 30: Illumination instrument
- 35: EC-value-changeable material injecting instrument
- 40: Air conditioner
- 45: pH-value-changeable material injecting instrument
- 50: Control unit
- 60: Ambient air temperature sensor
- 65: Illuminance sensor
- 70: Humidity sensor
- 80: CO₂ concentration sensor
- 90: Nutrient solution temperature sensor
- 95: EC sensor
- 98: pH sensor
- 200: Hydroponic device
- P: Pump
- B: Boiler

## Claims

1. A hydroponic method for at least one plant, comprising:
a changing step of changing a cultivation condition value by a prescribed value, the cultivation condition value contributing to an increase and a decrease in CO₂ consumption amount by the at least one plant;
a measuring step of measuring the CO₂ consumption amount per unit time period by the at least one plant; and
a determining step of determining whether the CO₂ consumption amount is increased or decreased due to the changing step, by comparing the CO₂ consumption amounts obtained in the measuring steps before and after the changing step with each other, wherein
when the CO₂ consumption amount is determined to be increased in the determining step, the changing step after the determining step is executed by using the prescribed value used in the changing step before the determining step,
when the CO₂ consumption amount is determined to be decreased in the determining step, the changing step after the determining step is executed by using another prescribed value with a positive or negative sign reversed from a positive or negative sign of the prescribed value used in the changing step before the determining step,
when the cultivation condition value changed by using the prescribed value in the changing step is equal to or above a preset upper limit value, the cultivation condition value is replaced with the upper limit value, and
when the cultivation condition value changed by using the prescribed value in the changing step is equal to or below a preset lower limit value, the cultivation condition value is replaced with the lower limit value.

2. A hydroponic method for at least one plant, comprising:
a changing step of changing a cultivation condition value by a prescribed value, the cultivation condition value contributing to an increase and a decrease in CO₂ consumption amount by the at least one plant;
a measuring step of measuring the CO₂ consumption amount per unit time period by the at least one plant; and
a determining step of determining whether the CO₂ consumption amount is increased or decreased due to the changing step, by comparing the CO₂ consumption amounts obtained in the measuring steps before and after the changing step with each other, wherein
when the CO₂ consumption amount is determined to be increased in the determining step, the changing step after the determining step is executed by using the prescribed value used in the changing step before the determining step,
when the CO₂ consumption amount is determined to be decreased in the determining step, the changing step after the determining step is executed by using another prescribed value with a positive or negative sign reversed from a positive or negative sign of the prescribed value used in the changing step before the determining step,
a determination as to whether or not the CO₂ consumption amount is changed due to the changing step is also made in the determining step, and
when the CO₂ consumption amount is determined as not changed in the determining step, the changing step after the determining step is executed by using one of the prescribed value and the other prescribed value with the positive or negative sign reversed from the positive or negative sign of the prescribed value, the one of the prescribed values to be used being a value with which a power consumption amount required for cultivating the at least one plant is reduced.

3. The hydroponic method according to claim 1 or 2, wherein
the at least one plant is cultivated in a space inside a housing surrounding the entirety of the at least one plant in a tightly sealing manner, and
the CO₂ consumption amount is calculated in the measuring step based on an amount of change in CO₂ concentration within a prescribed time period in the space inside the housing.

4. The hydroponic method according to any one of claims 1 to 3, wherein
the CO₂ consumption amount is calculated in the measuring step based on an amount of change in CO₂ concentration within a prescribed time period in a tightly sealed space around at least one leaf of the at least one plant.

5. A hydroponic device for at least one plant, comprising:
a changing unit configured to change a cultivation condition value by a prescribed value, the cultivation condition value contributing to an increase and a decrease in CO₂ consumption amount by the at least one plant;
a measuring unit configured to measure the CO₂ consumption amount per unit time period by the at least one plant; and
a determining unit configured to determine whether the CO₂ consumption amount is increased or decreased due to the change by the changing unit, by comparing the CO₂ consumption amounts obtained by the measurement by the measuring unit before and after the change by the changing unit with each other, wherein
when the determining unit determines that the CO₂ consumption amount is increased, the change is executed by the changing unit after the determination by the determining unit by using the prescribed value used in the change by the changing unit before the determination by the determining unit,
when the determining unit determines that the CO₂ consumption amount is decreased, the change is executed by the changing unit after the determination by the determining unit by using another prescribed value with a positive or negative sign reversed from a positive or negative sign of the prescribed value used in the change by the changing unit before the determination by the determining unit,
when the cultivation condition value changed by the changing unit using the prescribed value is equal to or above a preset upper limit value, the cultivation condition value is replaced with the upper limit value, and
when the cultivation condition value changed by the changing unit using the prescribed value is equal to or below a preset lower limit value, the cultivation condition value is replaced with the lower limit value.

6. A hydroponic device for at least one plant, comprising:
a changing unit configured to change a cultivation condition value by a prescribed value, the cultivation condition value contributing to an increase and a decrease in CO₂ consumption amount by the at least one plant;
a measuring unit configured to measure the CO₂ consumption amount per unit time period by the at least one plant; and
a determining unit configured to determine whether the CO₂ consumption amount is increased or decreased due to the change by the changing unit, by comparing the CO₂ consumption amounts obtained by the measurement by the measuring unit before and after the change by the changing unit with each other, wherein
when the determining unit determines that the CO₂ consumption amount is increased, the change is executed by the changing unit after the determination by the determining unit by using the prescribed value used in the change by the changing unit before the determination by the determining unit,
when the determining unit determines that the CO₂ consumption amount is decreased, the change is executed by the changing unit after the determination by the determining unit by using another prescribed value with a positive or negative sign reversed from a positive or negative sign of the prescribed value used in the change by the changing unit before the determination by the determining unit,
the determining unit also determines whether or not the CO₂ consumption amount is changed due to the change by the changing unit, and
when the determining unit determines that the CO₂ consumption amount is not changed, the changing unit executes the change after the determination by the determining unit by using one of the prescribed value and the other prescribed value with the positive or negative sign reversed from the positive or negative sign of the prescribed value, the one of the prescribed values to be used being a value with which a power consumption amount required for cultivating the at least one plant is reduced.

## Amended claims

### Amended claims under Art. 19.1 PCT

**1.** (Amended) A hydroponic method for at least one plant, comprising:
a changing step of changing a cultivation condition value by a prescribed value, the cultivation condition value contributing to an increase and a decrease in CO₂ consumption amount by the at least one plant;
a measuring step of measuring the CO₂ consumption amount per unit time period by the at least one plant; and
a determining step of determining whether the CO₂ consumption amount is increased or decreased due to the changing step, by comparing the CO₂ consumption amounts obtained in the measuring steps before and after the changing step with each other, wherein
when the CO₂ consumption amount is determined to be increased in the determining step, the changing step after the determining step is executed by using the prescribed value used in the changing step before the determining step,
when the CO₂ consumption amount is determined to be decreased in the determining step, the changing step after the determining step is executed by using another prescribed value with a positive or negative sign reversed from a positive or negative sign of the prescribed value used in the changing step before the determining step,
a determination as to whether or not the CO₂ consumption amount is changed due to the changing step is also made in the determining step, and
when the CO₂ consumption amount is determined as not changed in the determining step, the changing step after the determining step is executed by using one of the prescribed value and the other prescribed value with the positive or negative sign reversed from the positive or negative sign of the prescribed value, the one of the prescribed values to be used being a value with which a power consumption amount required for cultivating the at least one plant is reduced.

**2.** (Amended) The hydroponic method according to claim 1, wherein
the at least one plant is cultivated in a space inside a housing surrounding the entirety of the at least one plant in a tightly sealing manner, and
the CO₂ consumption amount is calculated in the measuring step based on an amount of change in CO₂ concentration within a prescribed time period in the space inside the housing.

**3.** (Amended) The hydroponic method according to claim 1, wherein
the CO₂ consumption amount is calculated in the measuring step based on an amount of change in CO₂ concentration within a prescribed time period in a tightly sealed space around at least one leaf of the at least one plant.

**4.** A hydroponic device for at least one plant, comprising:
a changing unit configured to change a cultivation condition value by a prescribed value, the cultivation condition value contributing to an increase and a decrease in CO₂ consumption amount by the at least one plant;
a measuring unit configured to measure the CO₂ consumption amount per unit time period by the at least one plant; and
a determining unit configured to determine whether the CO₂ consumption amount is increased or decreased due to the change by the changing unit, by comparing the CO₂ consumption amounts obtained by the measurement by the measuring unit before and after the change by the changing unit with each other, wherein
when the determining unit determines that the CO₂ consumption amount is increased, the change is executed by the changing unit after the determination by the determining unit by using the prescribed value used in the change by the changing unit before the determination by the determining unit,
when the determining unit determines that the CO₂ consumption amount is decreased, the change is executed by the changing unit after the determination by the determining unit by using another prescribed value with a positive or negative sign reversed from a positive or negative sign of the prescribed value used in the change by the changing unit before the determination by the determining unit,
the determining unit also determines whether or not the CO₂ consumption amount is changed due to the change by the changing unit, and
when the determining unit determines that the CO₂ consumption amount is not changed, the changing unit executes the change after the determination by the determining unit by using one of the prescribed value and the other prescribed value with the positive or negative sign reversed from the positive or negative sign of the prescribed value, the one of the prescribed values to be used being a value with which a power consumption amount required for cultivating the at least one plant is reduced.

**5.** Cancelled)

**6.** Cancelled)
